# EUROPÄISCHE PATENTSCHRIFT

(11) **EP 1 525 394 B1**
(45) Veröffentlichungstag und Bekanntmachung des Hinweises auf die Patenterteilung: **07.06.2006**
(21) Anmeldenummer: 03792170.7
(22) Anmeldetag: 02.07.2003
(51) Int. Cl.: F03B 11/00, F16J 15/44

(54) **DICHTUNG ZWISCHEN ZWEI RELATIV ZUEINANDER BEWEGBAREN TEILEN EINER HYDRAULISCHEN MASCHINE**
JOINT ARRANGED BETWEEN MUTUALLY MOBILE PARTS OF A HYDRAULIC MACHINE
JOINT DISPOSE ENTRE DES PIECES MUTUELLEMENT MOBILES D'UNE MACHINE HYDRAULIQUE

(30) Priorität: 31.07.2002 AT 11672002
(43) Veröffentlichungstag der Anmeldung: 27.04.2005
(73) Patentinhaber: Gittler, Philipp, 1130 Wien (AT)
(72) Erfinder: Gittler, Philipp, 1130 Wien (AT)
(74) Vertreter: VA TECH Patente GmbH & Co
(86) Internationale Anmeldenummer: PCT/EP2003/007039
(87) Internationale Veröffentlichungsnummer: WO 2004/018870

(56) Entgegenhaltungen:
- WO-A-02/23038
- US-A- 3 827 767

## Beschreibung

Die gegenständliche Erfindung betrifft eine Vorrichtung zum Abdichten eines Spaltes zwischen zwei relativ zueinander bewegbaren Teilen einer hydraulischen Maschine mit zumindest einem Dichtkörper, welcher gegenüber den zwei bewegbaren Teilen mittels je zumindest eines hydrostatischen Lagers gelagert ist, wobei jedes der hydrostatischen Lager aus einander zugewandten Lagerflächen besteht und wobei zumindest eine Lagerfläche zumindest ein Lagerelement, wie z.B. eine Nut, Rille od. dgl. aufweist, das über zumindest eine Versorgungsleitung mit einem hydraulischen Lagermedium versorgbar ist. Weiters offenbart die Erfindung ein Verfahren zum Betreiben und ein Verfahren zur Inbetriebnahme einer solchen Abdichtung.

Aufgrund der sehr ungünstigen Betriebszustände im Bereich der Außendurchmesser eines Laufrades einer hydraulischen Maschine, und hier vor allem bei größeren Maschinen mit Laufraddurchmessern von bis zu einigen Metern, war es bisher nicht möglich, eine zuverlässige Abdichtung zwischen Laufrad und Gehäuse zu bauen, was neben einer Wirkungsgradeinbuße durch Spaltverluste auch zu weiteren beträchtlichen Problemen führen kann. Dies liegt vor allem daran, dass im Bereich der Außendurchmesser des Laufrades, sehr hohe Umfangsgeschwindigkeiten auftreten, das Laufrad, sowie das Gehäuse starken Schwingungen unterworfen sind und aufgrund der hohen wirkenden Drücke das Laufrad zusätzliche axiale Verschiebungen erfährt. Diese Betriebszustände haben es bisher verhindert, eine nahezu, oder idealer Weise vollständig, dichte Abdichtung zu bauen. Bisher angewandte Dichtungen, wie z.B. Labyrinthdichtungen, sind keine Dichtungen im eigentlichen Sinn, sondern lediglich Vorrichtungen zur Reduzierung des Spaltwasserstromes. Andere, wie z.B. bekannte Eisringdichtungen, waren wiederum sehr aufwendig und unzuverlässig.

Im axialen Rad-Seitenraum, also zwischen innerer Deckscheibe und Gehäuse, bildet sich durch den Spaltwasserstrom ein mitunter sehr hoher Druck aus, der im Wesentlichen dem Oberwasserdruck entspricht, und der versucht das Laufrad in axialer Richtung zu verschieben, wodurch es zu großen axialen Belastungen der Lagerung und relativ großen axialen Verschiebungen des Laufrades kommt. In beiden entstehenden Rad-Seitenräumen, zwischen Gehäuse und äußerer bzw. innerer Deckscheibe, entsteht ein Spaltwasserstrom wodurch ein gewisser Anteil des Mediums nicht durch das Laufrad fließt und es somit zu einer Wirkungsgradeinbuße und zu einem Leistungsverlust kommt. In beiden Rad-Seitenräumen entsteht darüber hinaus eine sehr schnell rotierende Wasserscheibe, die aufgrund der entstehenden Reibung der Rotation der Welle entgegen wirkt und somit eine bremsende Wirkung entfaltet, was wiederum den Wirkungsgrad weiter reduziert.
Aus diesen Gründen ist es erwünschenswert, eine nahezu vollständig dichte Abdichtung zwischen Laufrad und Gehäuse vorzusehen.

Eine solche Abdichtung ist z.B. aus der WO 02/23038 A1 bekannt, in der im Wesentlichen zwei Arten von Abdichtungen, die aus speziellen auf zwei hydrostatischen Lagern fliegend gelagerten Dichtringen bestehen, offenbart sind:

Eine erste Art, bei der der Dichtring gegenüber dem Gehäuse und dem Laufrad drehfest gelagert ist und ein hydrostatisches Lager durch flexible Leitungen, die vom Turbinengehäuse zum Dichtring führen, mit dem Lagermedium versorgt wird. Aufgrund der vorherrschenden vorhin beschriebenen Betriebszustände stellen solche flexible Leitungen natürlich eine gewisse Schwachstelle dar, müssen also entsprechend robust gebaut werden und die Wartungszeiten müssen entsprechend verkürzt werden, um durch regelmäßige Wartung einen Bruch durch Verschleiß der flexiblen Leitungen zu verhindern, was zum Ausfall der Abdichtung und zu einer erheblichen Beschädigung führen kann. Darüber hinaus ist der Einbau eines solchen Ringes mit einer Anzahl von flexiblen Leitungen relativ aufwendig. Aus diesen Gründen wird eine solche Ausführung einer Dichtung, sowohl von den Herstellern als auch von den Betreibern abgelehnt.

Die zweite Art betrifft Dichtringe, die bezüglich des Laufrades und des Gehäuses frei rotierend "fliegend" gelagert sind, wobei das Lagermedium für die hydrostatischen Lager durch Bohrungen im Turbinengehäuse und durch Verbindungsbohrungen im Dichtring selbst zugeführt wird. Die WO 02/23038 zeigt nun im speziellen zwei Varianten eines solchen Dichtringes.

Bei der ersten Variante (nach Fig. 3 der WO 02/23038) ist eine Reihe von Versorgungsleitungen vorgesehen, wobei die Mündungen dieser Versorgungsleitungen in die Lagerflächen den Mündungen der Verbindungsbohrungen im Dichtring gegenüberstehen. In der Praxis zeigt dieser Ring eine unbefriedigende Funktionstauglichkeit. Liegt der Dichtring nämlich radial fest am Gehäuse an, so kann der Dichtring in radialer Richtung schwer zum Abheben gebracht werden, das gesamte Lagermedium das man über die Versorgungsleitung hineindrückt wird nämlich über die Verbindungsbohrung zum zweiten Lager geleitet und führt zu einem starken Abheben in axialer Richtung. Der Dichtring würde also am Gehäuse schleifen, was zur Beschädigung führt und in Folge zur Zerstörung führen kann. Hingegen im Fall, dass der Ring mit einem gewissen radialen Spiel eingebaut ist, würde er sich im Betrieb zwar zentrieren und sich radial und axial erheben, aber er würde aufgrund der fehlenden Kräftebalance keine bevorzugte Position einnehmen, er wäre instabil und er wäre radial ebenso wenig regulierbar. Versucht man nämlich die radiale Position durch Verändern des Volumenstromes zu verändern, würde sich lediglich die axiale Position verändern, da ein veränderter Volumenstrom wiederum über die Verbindungsbohrung direkt an das axiale Lager weitergeleitet werden würde. Ein solcher Dichtring wäre in der Praxis also wenig praktikabel.

In der zweiten Variante (nach Fig. 4 und 5 der WO 02/23038) sind nun zumindest zwei Reihen von Versorgungsleitungen vorgesehen, die in einem Abstand zueinander angeordnet sind und über die unabhängig voneinander Lagermedium in die hydrostatischen Lager gefördert wird. Die Mündung nur einer dieser zwei Versorgungsleitungen steht dabei den Mündungen der Verbindungsbohrung im Dichtring gegenüber.
Dem Vorteil dieses Ringes, dass sowohl das radiale als auch das axiale Lager weitgehend separat angesteuert und geregelt werden können und eine stabile Betriebsposition erreicht werden kann, steht bei dieser Variante der Nachteil gegenüber, dass zur Stabilisierung und Regelbarkeit beider Lager zwei Reihen von Versorgungsleitungen benötigt werden, die unabhängig von einander versorgt und angesteuert werden müssen, d.h. es sind zumindest zwei Sätze von Versorgungspumpen, zum Teil von beträchtlicher Leistung, einschließlich der zugehörigen Steuerung oder zusätzliche hydraulische Bauteile, wie z.B. Drosseln, Filter, etc., erforderlich, sodass der Leistungsgewinn durch eine effektive Abdichtung von der erforderlichen Pumpleistung oder durch Drosselverluste teilweise, oder sogar vollständig, wieder aufgefressen wird. Außerdem ist die Herstellung einer solchen Abdichtung fertigungstechnisch erheblich aufwendiger, da natürlich die doppelte Anzahl von Bohrungen und Leitungen benötigt werden.

Die gegenständliche Erfindung hat sich nun die Aufgabe gestellt, die oben angeführten Nachteile zu beseitigen und eine effektive und zuverlässige Abdichtung der eingangs erwähnten Art zu schaffen, die wenig Ressourcen benötigt, einfach umgesetzt und betrieben werden kann, sowie eine lange Lebensdauer aufweist.

Diese Aufgabe wird durch die Erfindung gelöst, indem in einem Abstand zu einem ersten Lagerelement eines ersten hydrostatischen Lagers zumindest ein weiteres, zweites Lagerelement des ersten hydrostatischen Lagers angeordnet ist, welches über einen hydraulischen Widerstand mit dem ersten Lagerelement verbunden ist, wobei die Versorgungsleitung für dieses Lager ausschließlich im Bereich des ersten Lagerelementes in die Lagerfläche mündet.
Ein solcher Dichtkörper verringert die erforderliche Anzahl von Versorgungsleitungen und reduziert damit den fertigungstechnischen Aufwand, als auch die Anzahl der erforderlichen Versorgungsaggregate und -elemente.
Obgleich nur eine einzige Versorgungsleitung vorgesehen wird, gelingt es, einen solchen Dichtkörper mit Hilfe eines hydraulischen Widerstandes auf einem gewünschten axialen und radialen Lagerspalt stabil einzustellen, wodurch sich eine stabile Betriebsposition ergibt. Beide Lagerspalte können durch den Volumenstrom variiert werden und stehen dabei in einem im Wesentlichen festen Verhältnis zueinander, d.h. der Dichtkörper ist mit nur einer Versorgungsleitung in beiden Richtungen vollständig kontrollierbar. Da sich der Dichtkörper in axialer und in radialer Richtung im Wesentlichen gleichzeitig und gleichmäßig erhebt, wird sichergestellt, dass sich der Dichtkörper nicht in nur einer Richtung erhebt, was die Betriebssicherheit erheblich verbessert.

Für das Verfahren zum Betreiben einer erfindungsgemäßen Abdichtung wird die Aufgabe dadurch gelöst, dass die hydraulische Maschine erst dann eingeschaltet wird, nachdem die vorgegebenen Lagerspalte eingestellt wurden. Dadurch werden Reib- bzw. Mischreibzustände und eine damit verbundene Abnützung, Beschädigung oder sogar Zerstörung des Dichtkörpers während des Hochfahrens der Maschine wirkungsvoll verhindert. Die Lebensdauer eines solchen Dichtkörpers wird damit erheblich verbessert.

Während der Inbetriebnahme der Abdichtung, also bei einem der erstmaligen Einschaltvorgänge, kann es jedoch vorteilhaft sein, den Dichtkörper kontrolliert in einen Mischreibungszustand zu bringen, sodass sich ein Lagerbild in die Lagerflächen der hydraulischen Lager einschleifen kann. Damit werden gewisse Fertigungstoleranzen des Dichtkörpers oder der Lagerflächen ausgeglichen und der Betrieb, sowie die Lebensdauer der Abdichtung kann verbessert werden. Nach dem Einschleifen des Lagerbildes wird der Dichtkörper natürlich auf die vorgegebenen Lagerspalte angehoben und normal betrieben.
Da der Dichtkörper typischerweise aus einem weicheren Material als die zugehörigen Lagerflächen am Gehäuse bzw. Laufrad oder umgekehrt gefertigt ist, kann ein solches Lagerbild sehr einfach und kontrolliert erzielt werden.

Der Dichtkörper kann sehr einfach hergestellt und betrieben werden, wenn die beiden hydrostatischen Lager mittels einer hydraulischen Verbindung miteinander verbunden werden. Damit reicht es aus, nur ein einziges hydrostatische Lager mit einem Lagermedium zu versorgen, wodurch das zweite automatisch mitversorgt wird.

Eine sehr vorteilhafte Druckverteilung, die zu einem sicheren Abheben des Dichtkörpers in beide Richtungen führt, stellt sich ein, indem die Breite des Lagerelementes des ersten hydrostatischen Lagers bezogen auf die Gesamtbreite dieses Lagers kleiner als die Breite des Lagerelementes des zweiten hydrostatischen Lagers bezogen auf die Gesamtbreite dieses Lagers gewählt wird. Für das sichere Betreiben des Dichtkörpers und Erreichen einer ausreichenden Stabilität ist es besonders vorteilhaft, wenn der Abstand zwischen den beiden Lagerelementen des hydrostatischen Lagers in welches die Versorgungsleitung mündet kleiner einem maximalen Abstand ist, der sich dabei im Wesentlichen aus den geometrischen Abmessungen des Dichtkörpers ergibt. Durch Einhalten dieser geometrischen Vorgabe erhält man einen äußerst effektiven und betriebssicheren Dichtkörper.

Ein besonders einfacher Dichtkörper ergibt sich in Form eines Dichtringes. Ein solcher Ring kann sehr einfach und günstig hergestellt werden.

Die Lebensdauer des Dichtkörper wird erheblich erhöht, wenn der Dichtkörper auf den hydrostatischen Lagern fliegend gelagert wird, da dann eine Festkörperreibung zwischen Dichtfläche und Dichtkörper in allen Betriebspunkten der hydraulischen Maschine ausgeschlossen wird.

Die erfindungsgemäße Abdichtung wird vorteilhaft zum Abdichten eines Laufrades und eines Gehäuses der hydraulischen Maschine, insbesondere einer Turbomaschine, verwendet, womit sich die Rad-Seitenräume effektiv abdichten lassen und bei entsprechender Anordnung, z.B. im peripheren Bereich des Laufrades, mit Ausnahme des Lagermediums, nicht mit dem Betriebsmedium der hydraulischen Maschine gefüllt sind. Die Entstehung der oben erwähnten negativen Effekte werden dadurch verhindert.

Ganz besonders vorteilhaft ist die Anwendung der Dichtung für eine Turbine, insbesondere eine Francisturbine oder eine Pumpturbine, oder eine Pumpe.

Das Lagerelement kann einfach und kostengünstig als eine, über den Umfang gegebenenfalls abschnittsweise unterbrochene, Ringnut gebildet werden, die darüber hinaus sehr leicht herstellbar ist. Gleichfalls konstruktiv und fertigungstechnisch einfach sind Bohrungen als hydraulische Verbindung im Dichtkörper und als Versorgungsleitung im Gehäuse der hydraulischen Maschine.

Die Eigenschaften des Dichtkörpers und damit der Abdichtung selbst kann durch die Anordnung eines dritten Lagerelementes, oder mehrerer Lagerelemente, in den Lagerflächen des hydrostatischen Lagers weiter verbessert werden. Durch das zusätzliche Lagerelement entsteht eine breitere Druckverteilung, die besser beherrschbar ist und mit der das Momentengleichgewicht am Dichtkörper leichter eingestellt werden kann.

Der Dichtkörper wird in vorteilhafter Weise derart ausgeführt, dass das mittlere Lagerelement breiter als die übrigen Lagerelemente ausgeführt ist. Eine weitere günstige geometrische Vorgabe ergibt sich durch die spezielle Wahl des Abstandes zwischen den äußeren Kanten der beiden äußeren der mehreren Lagerelemente bezogen auf die Breite dieses hydrostatischen Lagers, sodass dieser kleiner als die Breite des Lagerelementes des anderen hydrostatischen Lagers bezogen auf die Breite dieses hydrostatischen Lagers ist.
Ebenso ist es günstig, bei vorgegebenen geometrischen Abmessungen des Dichtkörpers, wie z.B. Höhe und Breite des Dichtringes, Anordnung und Breite der Lagerelemente, Insbesondere der Nuten, Rillen, etc., den Abstand zwischen dem ersten und dem zweiten Lagerelement des ersten hydrostatischen Lagers kleiner einem vorbestimmten maximalen Abstand zu wählen.

Die hydrostatischen Lager werden sehr vorteilhaft mit einem konstanten Volumenstrom des Lagermediums versorgt. Damit kann der Dichtkörper eigenständig und kontrollierbar auf Änderungen der äußeren Bedingungen, wie Temperaturänderungen des Mediums und einer damit verbundenen Längenänderung des Dichtkörpers, Schwingungen des Gehäuses oder des Laufrades, Fertigungstoleranzen, eine Verkippung des Dichtringes, etc., reagieren, da der Volumenstrom, neben den geometrischen Abmessungen, wesentlich für die Druckverteilung verantwortlich ist. Der Dichtkörper ist damit selbstregulierend, gleicht also äußere Störungen selbstständig aus.

Eine einfach Versorgung der hydrostatischen Lager kann durch zumindest eine Pumpe gewährleistet werden. Als mögliche Alternative zu Pumpen, könnte auch das Oberwasser, welches natürlich einen hohen hydrostatischen Druck aufweist, verwendet werden, wobei dann vor der Mündung der Versorgungsleitung zumindest eine Drossel, die z.B. als Stromregelventil ausgeführt ist, vorgesehen sein sollte, um einen bestimmten im Wesentlichen konstanten Volumenstrom vorgeben zu können.

Der Dichtkörper bzw. die Abdichtung kann äußerst günstig und mit geringen Verlusten betrieben werden, wenn die durch den Dichtring hervorgerufene Verlustleistung durch eine geeignete Geometrie des Dichtkörpers minimiert wird. Eine solche Abdichtung weist somit eine minimale Verlustleistung auf, wodurch der Gesamtwirkungsgrad der Turbine, aufgrund der Verhinderung der Ausbildung von Spaltwasserströme durch die Abdichtung, beträchtlich gesteigert werden kann.

Die Lagerwirkung der hydrostatischen Lager kann zum Teil erheblich gesteigert werden, wenn zusätzlich in zumindest einer der Lagerflächen zumindest ein hydrodynamisches Lagerelement, wie eine Schmiertasche, vorgesehen wird. Zur herkömmlichen hydrostatischen Lagerwirkung kommt also zusätzlich noch eine hydrodynamische Lagerwirkung hinzu, die bei den herrschenden Geschwindigkeiten einen beträchtlichen Anteil der gesamten Lagerwirkung ausmachen kann.

Bei einem Ausfall des die hydraulischen Lager versorgenden Volumenstromes sollte die hydraulische Maschine vorzugsweise ausgeschaltet werden, um eventuelle Beschädigungen an der Abdichtung bzw. am Dichtkörper zu verhindern. Die Betriebssicherheit wird erhöht, wenn im Falle eines Ausfalle zumindest für einen gewissen Zeitraum, vorzugsweise so lange bis die hydraulische Maschine zum Stillstand gekommen ist, eine Notversorgung der hydraulischen Lager, z.B. mittels eines Windkessels, sichergestellt ist. Durch eine solche Notversorgung kann eine mögliche Beschädigung des Dichtringes vermieden werden.

Der Wirkungsgrad kann noch weiter verbessert werden, indem nach dem Hochfahren der hydraulischen Maschine eine Anzahl der Versorgungsquellen abgeschaltet wird. Dabei sollte natürlich sichergestellt sein, dass die verbleibende Versorgung ausreichend ist, um den Dichtkörper in allen Betriebszuständen im fliegenden Zustand zu halten, ohne dass es zu Mischreibungsphasen kommt.

Im Wesentlichen konstante Lagerspalte können auf sehr einfache Weise gewährleistet werden, wenn natürliche Änderungen der Dichtkörpergeometrie, wie z.B. das Aufquellen des Dichtkörpers im Medium, durch Variieren des zugeführten Volumenstromes ausgeglichen werden.

Die gegenständliche Erfindung wird im Folgenden durch die beispielhaften, nicht einschränkenden, spezielle Ausführungsvarianten zeigenden Fig. 1 bis 4 beschrieben.
Fig. 1 zeigt einen Querschnitt einer typischen Francisturbine,
Fig. 2 eine Detailansicht des Dichtbereiches zwischen Laufrad und Gehäuse mit einem erfindungsgemäßen Dichtkörper,
Fig. 3 eine weitere spezielle Ausführungsform eines Dichtkörpers und
Fig. 4 ein geometrische Verhältnisse des Dichtkörpers darstellendes Diagramm.

Vorab der eigentlichen Beschreibung werden im Folgenden einige Begriffe definiert und näher erklärt.
Es werden oftmals die Begriffe Lagerelemente, wie z.B. Nuten, und Lagerfläche verwendet werden, die im Sinne dieser Anmeldung jeweils ein ring- bzw. zylinderförmiges Gebilde beschreiben. Ein Lagerelement oder Lagerfläche kann dabei beliebige Breiten und Tiefen bzw. Höhen aufweisen und kann in Umfangsrichtung durchgängig oder aber auch an einer oder mehreren Stellen abschnittsweise unterbrochen sein. Ein Lagerelement kann natürlich jede beliebige Querschnittsform, z.B. auch eine dreiecksförmige Rille, aufweisen und muss nicht unbedingt als Nut ausgeführt sein.
Ein hydraulisches Lager besteht immer aus einander zugewandten Lagerflächen, wobei in zumindest einer der Lagerflächen zumindest ein Lagerelement, wie z.B. eine Nut, Rillen oder ähnliches, angeordnet ist. Wenn über den Umfang nun mehrere Lagerelemente angeordnet sind, weil ein Lagerelement z.B. wie oben beschrieben abschnittsweise unterbrochen ist, so müsste man konsequenterweise auch von mehreren hydrostatischen Lagern, die über den Umfang verteilt angeordnet sind, sprechen. Der Einfachheit halber wird aber in der Anmeldung auch in solchen Fällen immer nur von einem hydrostatischen Lager gesprochen. Unter hydraulischer Verbindung bzw. Verbindungsbohrung wird im Sinne dieser Anmeldung zumindest ein Hohlraum mit zumindest zwei offenen Enden bezeichnet, wobei dieser Hohlraum auf beliebigem Weg von einem Ende zum anderen Ende von einem Medium durchströmbar ist.
Wenn von einer Versorgungsleitung die Rede ist, so ist zu beachten, dass in Umfangsrichtung eine Anzahl von solchen gleichartigen oder ähnlichen Versorgungsleitungen, also eine Reihe von Versorgungsleitungen, angeordnet sein können. Das Gleiche gilt natürlich auch für eine Verbindungsbohrung. Um die Beschreibung nicht zu kompliziert werden zu lassen, wird jedoch meistens nur von einer Versorgungsleitung oder einer Verbindungsbohrung gesprochen, wobei damit gegebenenfalls natürlich auch eine Reihe von Versorgungsleitungen oder Verbindungsbohrungen umfasst ist.

Der Einfachheit halber wird die erfindungsgemäße Abdichtung nur anhand einer Turbine, im speziellen einer Francis-Turbine, beschrieben, wobei diese Abdichtung jedoch selbstverständlich auch bei allen anderen hydraulischen Maschinen mit relativ zueinander bewegbaren Teilen, wie ein Laufrad, welches in einem Maschinengehäuse läuft, wie etwa bei Pumpen oder Pumpturbinen, äquivalent anwendbar ist.

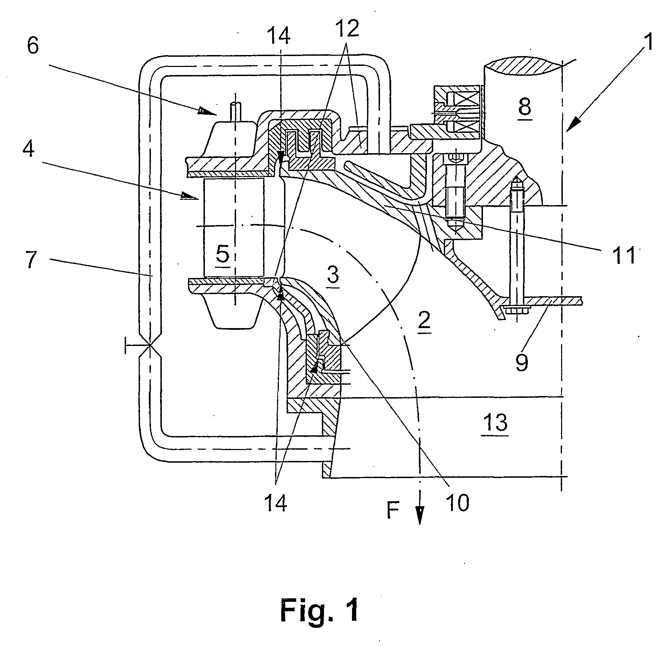

Die Fig. 1 zeigt nun eine Turbine 1, hier eine Francisturbine, mit einem Laufrad 2, welches in einem Turbinengehäuse 12 läuft. Das Laufrad 2 weist eine Anzahl von Turbinenschaufeln 3 auf, die durch eine innere 11 und äußere Deckscheibe 10 begrenzt werden. Das Laufrad 2 ist mittels eines Nabendeckels 9 und eventuell mittels noch weiteren Befestigungsmitteln, wie z.B. Bolzen oder Schrauben, an einem Ende der Welle 8 bezüglich der Welle 8 verdrehfest befestigt. Die Welle 8 ist mittels nicht dargestellter Wellenlager drehbar gelagert und treibt in bekannter Weise beispielsweise einen ebenfalls nicht dargestellten Generator zur Erzeugung von elektrischer Energie an, der bevorzugt am anderen Ende der Welle 8 angeordnet ist.

Der Zufluss des flüssigen Mediums, meistens Wasser, von einem Oberwasser, wie z.B. ein höher liegendes Wasserreservoir, erfolgt in den meisten Fällen über ein hier nicht dargestelltes, hinlänglich bekanntes Spiralgehäuse. Zwischen Spiralgehäuse und Laufrad 2 ist ein Leitapparat 4, bestehend aus einer Anzahl von Leitschaufeln 5, die in diesem Beispiel mittels eines Verstellapparates 6 verdrehbar sind. Die verstellbaren Leitschaufeln 5 dienen zur Regulierung der Leistung der Turbine 1 durch Verändern sowohl des Volumenstromes durch die Turbinen 1, als auch des Laufrad-Eintrittsdralles. Zusätzlich könnten zwischen Spiralgehäuse und Leitschaufeln 5 auch noch in bekannter Weise Stützschaufeln angeordnet sein.

Der Abfluss des Wassers erfolgt, wie in Fig. 1 gezeigt, über ein unmittelbar an die Turbine 1 anschließendes Saugrohr 13, das in ein nicht dargestelltes Unterwasser mündet. Daraus ergibt sich ein durch den Pfeil gekennzeichneter Hauptwasserstrom F vom Spiralgehäuse über den Leitapparat 4 und dem Laufrad 2 zum Saugrohr 13.
Neben dem Hauptwasserstrom F bildet sich bei herkömmlichen Dichtungen 14 auch noch ein Spaltwasserstrom durch die Rad-Seitenräume zwischen Turbinengehäuse 12 und äußerer 10 bzw. innerer Deckscheibe 11 aus. Das Spaltwasser des radialen Rad-Seitenraumes wird z.B. mittels einer Leitung 7 über eine Drossel abgeführt und in das Saugrohr 13 geleitet. Zusätzlich werden oftmals, wie in Fig. 1 angedeutet, Entlastungsbohrungen in der inneren Deckscheibe vorgesehen, über die der radiale Rad-Seitenraum mit dem Hauptwasserstrom F verbunden wird. Durch die erfindungsgemäße Abdichtung, wie weiter unten beschrieben, werden nun diese Spaltwasserströme unterbunden, sodass das gesamte zuströmende Wasser durch das Laufrad 2 fließt und dessen Strömungsenergie, ohne Spaltverluste, vollständig ausgenutzt werden kann. Darüber hinaus wird die Reibung im Rad-Seitenraum reduziert bzw. sogar minimiert, da sich mit einer solchen Abdichtung im Rad-Seitenraum keine rotierende Wasserscheibe mehr ausbildet, sondern dieser Raum, mit Ausnahme des Lagerwassers, von Luft ausgefüllt wird. Weiters wird dadurch auch der auf die Welle 8 und auf die Wellenlagerung wirkende Axialschub stark verringert.

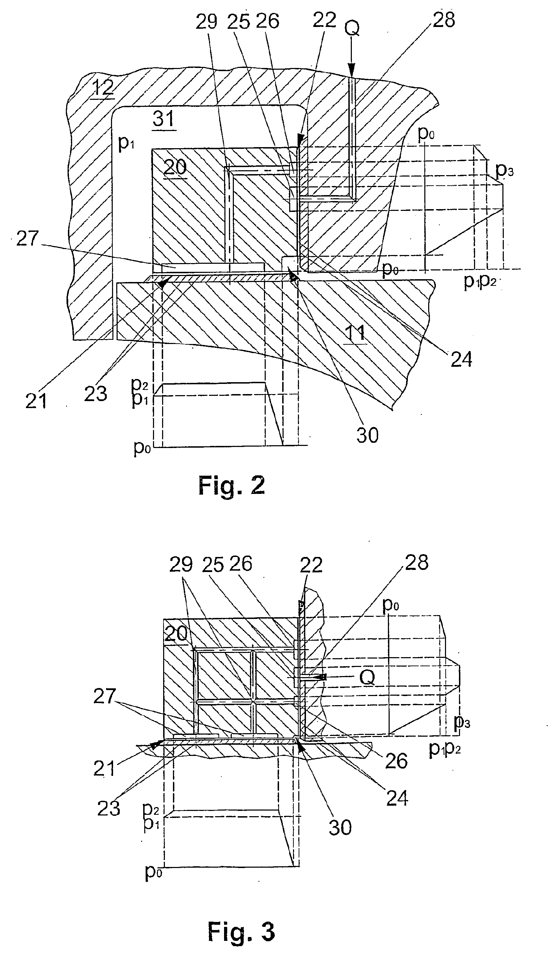

In der Fig. 2 ist nun eine Detailansicht einer beispielhaften erfinderischen Abdichtung eines Laufrades 2 einer Turbine 1 zwischen Turbinengehäuse 12 und innerer Deckscheibe 11 mittels eines als Dichtring ausgeführten Dichtkörpers 20 gezeigt. Dabei weist das Turbinengehäuse 12 eine Schulter auf, an der eine radiale Lagerfläche 24 angeordnet ist. Gleichfalls ist an der inneren Deckscheibe 11 eine axiale Lagerfläche 23 angeordnet. Diese Lagerflächen 23, 24 können separate Bauteile sein, die nachträglich an der erforderlichen Stelle aufgebracht werden, z.B. durch Schweißen, Schrauben, etc., oder können natürlich auch im entsprechenden Bauteil eingearbeitet werden, z.B. ein plangeschliffener Abschnitt an der inneren Deckscheibe 11.
Die Orientierungen "axial" bzw. "radial" beziehen sich dabei auf die Wirkrichtungen der hydrostatischen Lager und werden hauptsächlich zur einfacheren Unterscheidbarkeit der beiden hydrostatischen Lager 21, 22 eingeführt.
Der radialen 24 bzw. der axialen Lagerfläche 23 am Turbinengehäuse 12 bzw. an der inneren Deckscheibe 11 ist jeweils eine radiale 24 bzw. axialen Lagerfläche 23 am Dichtring 20 zugeordnet, die jeweils einen Teil eines hydrostatischen Lagers 21, 22 in axialer und radialer Richtung bilden.
In der Ausführung nach Fig. 2 wird über das Turbinengehäuse 12 mittels einer Versorgungsleitung 28 ein Lagermedium, wie beispielsweise Wasser, in das radiale hydrostatische Lager 22 zugeführt. Die Versorgungsleitung 28 wird hier aus Bohrungen gebildet, die über weitere Leitungen indirekt oder direkt mit einer nicht dargestellten Versorgungsquelle, wie eine Pumpe und/oder dem Oberwasser, eventuell über Hilfseinrichtungen wie Filter, Zyklone, etc., verbunden ist. Über den Umfang können natürlich eine Mehrzahl von Versorgungsleitungen 28 verteilt sein, wobei eine für eine ausreichende Versorgung günstige Anordnung, z.B. drei Versorgungsleitungen 28, die jeweils um einen Winkel von 120° versetzt angeordnet sind, vorgesehen sein kann. Natürlich ist auch jede andere Anordnung denkbar.
Das radiale Lager 22 weist nun zwei Lagerelemente in Form von Nuten 25, 26 auf, wobei eine Nut 25 im Dichtring 20 im Bereich der Mündung der Versorgungsleitung 28 und die zweite Nut 26 ebenfalls im Dichtring 20 in einem Abstand zur ersten Nut 25 angeordnet ist. Diese zweite Nut 26 ist nun über eine oder mehrere Verbindungsbohrung(en) 29 mit einer im Dichtring 20 angeordneten Nut 27 des axialen Lagers 21 verbunden. Die beiden Nuten 25, 26 des radialen Lagers 22 sind nun derart angeordnet, dass die Versorgungsleitung 28 in allen Betriebspositionen des Dichtringes 20 weder ganz noch teilweise in die zweite Nut 26 mündet.
Zu beachten ist dabei insbesondere auch, dass die Lagerelemente, hier Nuten 25, 26 und 27, auch gleichwertig in der axialen bzw. radialen Lagerfläche 23, 24 des Turbinengehäuses 12 oder des Laufrades 2, wie hier in der inneren Deckscheibe 11, angeordnet sein könnten. Ebenso möglich wäre es, Lagerelemente sowohl im Dichtkörper als auch im Turbinengehäuse 12 oder an einer beliebigen Stelle des Laufrades 2 vorzusehen.
Somit werden beide hydrostatischen Lager 21, 22 von einer einzigen Versorgungsleitung 28 bzw. Reihe von Versorgungsleitungen 28 mit Lagermedium versorgt. Das Lagermedium wird dabei im radialen Lager 22 zugeführt und fließt über die Verbindungsbohrungen 29 in das axiale Lager 21. Um eine ausreichende Versorgung des axialen Lagers 21 zu sichern, sind vorteilhafter Weise über den Umfang des Dichtringes 20 eine Mehrzahl von Verbindungsbohrungen 29 vorgesehen, je nach Umfang z.B. eine Bohrung alle 3 bis 8 Zentimeter.
Die Nut 27 des axialen Lagers 21 könnte gleichwertig auch so ausgeführt sein, dass im Bereich des äußeren und inneren Durchmessers des Dichtringes 20 jeweils eine schmälere Nut angeordnet ist, die jeweils über eine Verbindungsbohrung 29 mit dem radialen Lager 22 verbunden ist und versorgt wird.
Die Versorgungsleitung 28 könnte selbstverständlich auch im axialen Lager 21 münden, wobei dann die Anordnung der Nuten 25, 26 und 27 auch an der Diagonalen des Dichtringes entsprechend gespiegelt wäre.

Um die Funktion des Dichtringes 20 beschreiben zu können, sind in Fig. 2 zusätzlich noch die sich ergebenden Druckverteilungen im axialen und radialen Lager 21, 22 dargestellt. Das Lagermedium wird wie oben beschrieben über die Versorgungsleitung 28 mit einem konstanten Volumenstrom Q in das axiale Lager 21 zugeführt. Der Volumenstrom Q des Lagermediums teilt sich im radialen Lager 22 in zwei Ströme auf. Ein Strom fließt nach unten und mündet schließlich mit dem Druck p₀ in den axialen Rad-Seitenraum. Der größere Teil des Volumenstromes Q fließt nach oben zur zweiten Nut 26 und fließt über die Verbindungsbohrung 29 in das radiale Lager 21 und mündet teilweise mit dem am Laufradeintritt herrschenden Druck p₁ in den Lagerraum 31.
Der Volumenstrom Q verursacht die dargestellte Druckverteilung mit einem Maximaldruck p₃ in der Nut 25, in die die Versorgungsleitung 28 mündet, die den Dichtring 20 in radialer Richtung abhebt. Radiales Abheben bedeutet in diesem Zusammenhang natürlich, dass sich der Dichtring 20 aufweitet, wobei dieser Aufweitung sowohl der Oberwasserdruck p₁, als auch gemäß der Elastizitätstheorie die elastischen Rückstellkräfte entgegenwirken. Der Maximaldruck p₃ muss also groß genug sein, um eine solche Aufweitung des Dichtringes 20 auf den gewünschten Lagerspalt, z.B. typischerweise 50 - 100µm, bewirken zu können. In der zweiten Nut 26 bildet sich ein aufgrund der Geometrie geringerer Druck p₂, der durch die Verbindungsbohrung 28 gleichzeitig auch in der Nut 27 des axialen Lagers 21 wirkt. Dieser Druck p₂ muss ausreichend hoch sein, um den Dichtring 20 in axialer Richtung zum Abheben zu bringen, was dadurch erreicht werden kann, indem die beiden Nuten 25, 26 des radialen Lagers 22 sehr stark asymmetrisch und sehr nahe beisammen angeordnet werden, wie in Fig. 2 dargestellt.
Wären die Nuten 25, 26 zu weit auseinander, so würde der Druckabfall zwischen den Nuten 25, 26 zu groß sein und der erforderliche Abhebedruck p₂ würde nicht erreicht werden. D.h., dass der Druck p₂ für das Beispiel nach Fig. 2 durch die Geometrie des axialen Lagers des Dichtringes 20, also im Wesentlichen Breite und Lage der Nuten des entsprechenden Lagers 22, Außenabmessungen des Dichtringes 20, sowie eventueller Ausnehmungen 30, festgelegt wird. Würde man nun den Volumenstrom Q weiter erhöhen, so würde der Druck p₂ trotzdem im Wesentlichen gleich bleiben und der Dichtring 20 würde lediglich in axialer Richtung weiter abheben.

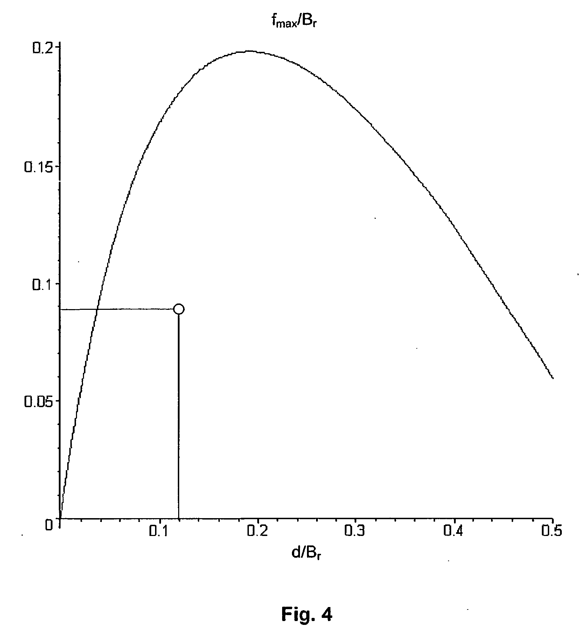

Es lässt sich durch Anwendung grundlegender hydraulischer Gesetzmäßigkeiten für eine beliebige Geometrie des Dichtringes 20 bzw. eine beliebige Anordnung der Nuten 25, 26, 27 ein maximaler Abstand fₘₐₓ zwischen den beiden Nuten 25, 26 angeben, der ausschließlich von der Geometrie abhängt und der eingehalten werden muss, um den Dichtring 20 in beiden Richtungen zum Abheben zu bringen. Das Ermitteln des maximalen Abstandes fₘₐₓ stellt für einen entsprechenden Fachmann eine Standardaufgabe dar. In Fig. 4 (die sich hier auf die Geometrie der Fig. 2 bezieht) wird beispielhaft ein solcher ermittelter Verlauf des maximalen Abstandes fₘₐₓ dargestellt. Bei diesem Beispiel werden die äußeren Abmessungen des Dichtringes 20, sowie die geometrischen Abmessungen des axialen hydrostatischen Lagers 21 und gewisse geometrische Abmessungen des radialen hydrostatischen Lagers 22 konstant gehalten und nur der Abstand d der oberen Kante des Dichtringes 20 zur zweiten Nut 26 variiert und das Ergebnis in Form eines Diagramms in Fig. 4 dargestellt. Die im Diagram verwendeten Größen wurde dabei auf die Breite Bᵣ des radialen Lagers 21 bezogen und daher dimensionslos gemacht. Der in Fig. 4 eingezeichnete Punkt zeigt dabei den Abstand f gemäß der Geometrie nach Fig. 2. Man erkennt eindeutig, dass sich der Dichtring im stabilen Bereich befindet.
Werden andere geometrische Parameter variiert, so erhält man natürlich unter Umständen andere Formen der Kurve, bzw. Fläche z.B. bei Variation zweier Parameter. Gleichartige Beziehungen lassen sich natürlich auch für andere Ausgestaltungen eines Dichtringes 20, z.B. wie in Fig. 3 beschrieben, angeben.

Der Dichtring 20 schwimmt nun also stabil auf zwei Gleitfilmen praktisch reibungslos, ist also "fliegend" gelagert. Im Betrieb wird sich der Dichtring 20 aufgrund der freien Lagerung mit ungefähr der halben Umfangsgeschwindigkeit des Laufrades 2 mitdrehen, da er nicht verdrehgesichert gehalten wird. Dadurch ergibt sich ein dynamischer Stabilitätsgewinn, da somit die Grenzumfangsgeschwindigkeit bzw. die Flattergrenze hinaufgesetzt wird. Darüber hinaus werden dadurch auch die Reibungsverluste geringer.
Durch die hohe Stabilität eines hydrostatischen Lagers, ist der Dichtring 20 in der Lage Schwingungen des Laufrades 2 und/oder des Turbinengehäuses 12, sowie axiale Verschiebungen des Laufrades 2 auszugleichen, ohne die Dichtwirkung zu verlieren und ohne in Kontakt mit dem Laufrad 2 und/oder dem Turbinengehäuse 12 zu geraten. Der Dichtring 20 erleidet dadurch praktisch keine Abnützung, wodurch die Lebensdauer eines solchen Dichtringes 20 sehr hoch ist. Dadurch, dass der Dichtring 20 als sehr schlanker, leichter Ring gebaut werden kann, der kaum Massenkräfte aufweist, wird diese Wirkung noch verstärkt.

Der Dichtring 20 kann, im Verhältnis zu den Abmessungen der Turbine 1, sehr klein gebaut werden, Kantenlängen von einigen Zentimeter, z.B. 5cm oder 8cm, bei Außendurchmessern von einigen Metern reichen vollkommen aus, und er kann aus einem beliebigen Material, wie Stahl, Lagerbronze, Kunststoff (z.B. PE), gefertigt sein. Weiters könnten die Lagerflächen 23, 24 auch noch mit einer geeigneten Schicht, wie Teflon, Lagerbronze, etc., überzogen werden, um die Eigenschaften der Abdichtung noch weiter zu verbessern. Typischerweise wird der Dichtring 20 aus einem weicheren Material gefertigt wie das Gehäuse 12 oder das Laufrad 2 der hydraulischen Maschine. Dadurch wird er zum Einen in der Regel leichter und zum Anderen wird im Extremfall der Dichtring 20 und nicht das Laufrad 2 oder das Gehäuse 12 beschädigt oder gar zerstört.

Da der Dichtring 20 im Querschnitt sehr klein gebaut werden kann, aber sehr hohe Drücke wirken können, besteht die Gefahr des Verkrempelns des Dichtringes 20. Um die entstehenden Krempelmomente ausgleichen zu können, sollte der Dichtring 20 momentenfrei ausgelegt werden, d.h. der Dichtring 20 sollte im Betrieb kein resultierendes Moment aufweisen. Dies kann, wie man sich einfach überlegen kann, dadurch erreicht werden, indem der Dichtring 20 so ausgelegt wird, dass die resultierenden Kräfte der jeweiligen Druckverteilungen an den Seiten des Dichtringes 20, also die resultierenden Kräfte des Oberwasserdruckes p₁ und der entstehenden Druckverteilungen in den hydrostatischen Lagern 21, 22, auf einer Wirkungslinie liegen. Um dies zu erreichen, dient neben der gesamten Geometrie des Dichtringes 20, wie die Dimensionen der Nuten 25, 26, 27, die Lagerspaltbreiten, die Außenabmessungen, etc, unter anderem auch die Ausnehmung 30.

Der Dichtring 20 kann selbstverständlich einen beliebigen Querschnitt, wie z.B. ein L-förmiger Querschnitt, aufweisen, wobei aus fertigungstechnischen Überlegungen eine quadratische oder rechteckige Form bevorzugt wird.

In Fig. 3 ist eine weiteres Ausführungsbeispiel eines erfinderischen Dichtringes 20 gezeigt. Dieser Dichtring 20 weist nun im radialen Lager 22 drei Nuten 25, 26 auf, wobei im Bereich der mittleren Nut 25, wie in Fig. 2 beschrieben, eine Versorgungsleitung 28 mündet, über die ein Volumenstrom Q eines Lagermediums zugeführt wird. Die beiden seitlich von dieser mittleren Nut 25 angeordneten Nuten 26 sind jeweils über Verbindungsbohrungen 29 mit den beiden Nuten 27 des axialen hydrostatischen Lagers 23 verbunden. In diesem Beispiel sind zwei Nuten 27 angeordnet, was die selbe Wirkung entfaltet, wie eine durchgehende Nut 27, wie in Fig. 2 beschrieben. Als Breite der Nut des axialen hydrostatischen Lagers 23 kann also der Abstand zwischen Außendurchmesser der linken und Innendurchmesser der rechten Nut 27 angesehen werden.
Jede der beiden äußeren Nuten 26 des radialen Lagers 22 ist hier mit jeder der Nuten 27 des axialen Lagers 23 über ein System von Verbindungsbohrungen 29 die in einer Querschnittsebene des Dichtringes 20 angeordnet sind verbunden. Es ist aber auch denkbar, die Verbindungen zu trennen und in unterschiedlichen Querschnittsebenen des Dichtringes anzuordnen. In einer Querschnittsebene wäre z.B. die obere Nut 26 mit der rechten Nut 27 verbunden, in einer nächsten Querschnittsebene die untere Nut 26 mit der linken Nut 27 und in wieder einer nächsten könnte wiederum ein System von Verbindungsbohrungen 29, wie in Fig. 3 gezeigt, angeordnet sein. Dabei ist bei Bedarf natürlich auch jede beliebige Kombination möglich.

Betrachtet man die Druckverteilungen dieses Dichtringes 20, so erkennt man, dass sich die Druckverteilung gegenüber der Ausgestaltung nach Fig. 2 im axialen hydrostatischen Lager 21 im Rahmen der geometrischen Verhältnisse im Wesentlichen unverändert bleibt, während sich die Druckverteilung im radialen hydrostatischen Lager 22 erheblich verändert. Diese Druckverteilung ist nun, bewirkt durch die dritte Nut 26 breiter und weist niedrigere Druckspitzen auf, d.h., dass ein solcher Dichtring 20 mit einem geringeren Versorgungsdruck betreibbar ist.

Die drei Nuten 25, 26 des radialen hydrostatischen Lagers können natürlich im Wesentlichen beliebig angeordnet werden. Beispielsweise könnten die beiden äußeren Nuten 26 die gleiche Breite aufweisen und symmetrisch um die mittlere Nut 25 bzw. bezüglich des Dichtringes 20 selbst angeordnet sein. Andererseits könnte die Anordnung der drei Nuten 25, 26 auch vollkommen asymmetrisch erfolgen.
Gleichfalls wäre es denkbar, mehr als drei Nuten vorzusehen, wodurch unter Umständen eine noch flachere Druckverteilung erzielt werden könnte.

In den Beispielen nach den Fig. 2 und 3 mündet die Versorgungsleitung 28 immer in das radiale hydrostatische Lager 22, wohingegen das axiale hydrostatische Lager 21 durch Verbindungsbohrungen 29 versorgt wird. Bei Bedarf kann diese Anordnung selbstverständlich auch umgekehrt ausgeführt sein.

Außerdem wurde bis jetzt immer von ebenen Lagerflächen 23, 24 ausgegangen. Es ist jedoch natürlich auch denkbar, die Lagerflächen 23, 24 nicht eben, z.B. konkav angeschliffen oder abgestuft, auszuführen, wobei sich am grundsätzlichen Prinzip der erfindungsgemäßen Abdichtung nichts ändert. Bei solchen nicht ebenen Lagerflächen 23, 24 würden sich lediglich die Druckverteilungen etwas ändern, was für einen entsprechenden Fachmann aber klar ersichtlich ist.

Durch den Betrieb des Dichtringes 20 entsteht eine gewisse Verlustleistung, z.B. durch die erforderliche Leistung einer oder mehrerer Versorgungspumpe(n), durch hydraulische Reibung im Lagerspalt, durch Unterwasserverluste, also Lagermedium, das nicht durch das Laufrad 2 geleitet werden kann, etc., die möglichst gering gehalten werden sollte. Einen Teil dieser Verlustleistung kann man natürlich dadurch zurückgewinnen, dass ein Teil des Lagermediums in den Hauptwasserstrom F geleitet wird und im Laufrad 2 in Energie umgewandelt wird. Trotzdem ist es erwünscht, die Verlustleistung des Dichtringes 20 zu minimieren. Dazu wird die Geometrie des Dichtringes 20, also Breite, Höhe, Position und Abmessungen der Nuten 25, 26, 27 und Lagerflächen 23, 24, Abmessungen und Lage der Versorgungsleitungen 28 und der Verbindungsbohrungen 29, etc., angepasst, um die entstehende Verlustleistung zu minimieren. Dies kann z.B. durch geeignete mathematische, z.B. numerische, Berechnungen anhand von mathematisch, physikalischen Modellen des Dichtringes erfolgen, in denen ein entsprechend formuliertes Optimierungsproblem gelöst wird. Mit herkömmlichen Computern und entsprechender Software kann ein solches Optimierungsproblem gelöst werden. In diese Berechnungen können natürlich auch noch die Geometrie und/oder die Betriebscharakteristik, also z.B. Auslegungspunkte, Leistungen, Drücke, etc., der hydraulischen Maschine einfließen.

Zur Verbesserung der Lagerwirkung und der Stabilität könnte eine oder mehrere der Lagerflächen 23, 24 auch mit hinlänglich bekannten hydrodynamischen Schmiertaschen versehen werden.

Grundsätzlich wird man eine Anzahl von Versorgungsleitungen 28 zu einer großen Sammelleitung zusammenführen, die dann von einer Lagermediumquelle, wie z.B. eine Pumpe, mit Lagermedium versorgt werden. Die Anzahl der Lagermediumquellen und Sammelleitungen kann dabei selbstverständlich nach Bedarf frei gewählt werden.

Eine erfindungsgemäße Abdichtung mit einem Dichtring 20 kann natürlich an jeder geeigneten Stelle vorgesehen werden und ist nicht auf die Ausführungsbeispiele nach der Fig. 2 und 3 beschränkt. Z.B. könnte der Dichtring 20 auch zwischen Stirnseite des Laufrades 2 bzw. innerer Deckscheibe 11 und dem Turbinengehäuse 12 angeordnet sein. Gleichermaßen ist es denkbar, eine solche Abdichtung an einer geeigneten Stelle zwischen äußerer Deckscheibe 10 und dem Maschinengehäuse 12 vorzusehen.

Außerdem ist die Anordnung der Nuten 25, 26, 27, sowie der Verbindungsbohrungen 29 und Versorgungsleitung 28 in den Fig. 2 und 3 lediglich beispielhaft. Vielmehr kann diese Anordnung im Rahmen der Erfindung beliebig gewählt werden. Z.B. könnte die Nut 26, die über die Verbindungsbohrung 29 mit der Nut 27 des anderen hydrostatischen Lager 21 verbunden ist, gleichwertig auch in der Nähe der Ausnehmung 30, also in Fig. 2 unterhalb der Nut 25, angeordnet werden. Die gesamte Anordnung könnte ebenfalls an der Diagonalen des Dichtringes gespiegelt werden. Alle möglichen und denkbaren Varianten sind durch diese Anmeldung selbstverständlich umfasst.

Die oben beschriebene Abdichtung stellt eine weitgehend dichte Abdichtung dar. Die gesamte zufließende Wassermenge fließt durch das Laufrad und kann in Rotationsenergie umgewandelt werden. Die Spaltwasserverluste reduzieren sich dabei ausschließlich auf das austretende Lagermedium, sind also sehr gering und können zum Teil durch Einleiten des Spaltwassers in den Hauptwasserstrom F wieder rückgewonnen werden.

In allen Phasen des Betriebes sollte tunlichst vermieden werden, dass der Dichtring 20 in Kontakt mit den Lagerflächen 23, 24 kommt oder sich Mischreibungszustände in den hydraulischen Lagern 21, 22 einstellen, da dann der Dichtring 20 sehr leicht beschädigt oder sogar zerstört werden kann. Beim Starten der Turbine 1 sollte der Dichtring 20 also bereits abgehoben sein, d.h. die erwünschten Lagerspalte sollten bereits erreicht sein. Dies kann einfach erreicht werden, indem man zuerst die Versorgung der hydraulischen Lager 21, 22 einschaltet und erst danach die Turbine 1 eingeschalten wird.
Im Falle eines Ausfalls der Versorgung der hydrostatischen Lager 21, 22 könnte man z.B. eine Notversorgung, wie ein Windkessel, vorsehen, um eine Beschädigung des Dichtringes 20 der hydraulischen Maschine, was aufwendige Wartungsarbeiten nach sich ziehen würde, zu vermeiden.

Bei der erstmaligen Inbetriebnahme des Dichtringes 20 kann es jedoch erwünscht sein, einen kontrollierten Mischreibungszustand in den hydraulischen Lagern 21, 22 einzustellen, sodass sich in den Lagerflächen 23, 24 ein Lagerbild einschleifen kann, wodurch gewisse Fertigungsungenauigkeiten ausgeglichen werden können. Da sich die Lagerspalte im hundert µm-Bereich bzw. darunter befinden, ist dabei natürlich entsprechende Vorsicht angebracht.

In der Beschreibung oben wird der Einfachheit halber als Lagermedium Wasser beschrieben. Das Lagermedium kann, vor allem bei Pumpen, natürlich auch ein beliebig anderes geeignetes Medium, wie z.B. ein Öl, sein.

Zwecks der Anschaulichkeit wird in der gesamten Anmeldung immer von Nuten, Rillen oder ähnlichem als Lagerelemente gesprochen. Es ist jedoch durchaus denkbar, ein oder mehrere Lagerelemente nicht dermaßen klar auszuprägen. Jede Spaltströmung, auch zwischen nutfreien glatten Oberflächen, weist natürlich einen gewissen hydraulischen Widerstand auf, sodass ein hydrostatisches Lager auch ohne ausgeprägte Lagerelemente, z.B. nur mit ebenen Flächen, funktionieren würde. Durch eine Oberflächenrauheit ergäbe sich darüber hinaus eine weitere Beeinflussung des hydraulischen Widerstands, z.B. könnten die Lagerflächen 23, 24 zur Ausbildung von "Lagerelementen" unterschiedlich geschliffen sein.

## Patentansprüche

1. Vorrichtung zum Abdichten eines Spaltes zwischen zwei relativ zueinander bewegbaren Teilen einer hydraulischen Maschine mit zumindest einem Dichtkörper, welcher gegenüber den zwei bewegbaren Teilen mittels je zumindest eines hydrostatischen Lagers gelagert ist, wobei jedes der hydrostatischen Lager aus einander zugewandten Lagerflächen besteht und wobei zumindest eine Lagerfläche zumindest ein Lagerelement, wie z.B. eine Nut, Rille od. dgl. aufweist, das über zumindest eine Versorgungsleitung mit einem hydraulischen Lagermedium versorgbar ist, **dadurch gekennzeichnet, dass** in einem Abstand zu dem ersten Lagerelement eines ersten hydrostatischen Lagers zumindest ein weiteres, zweites Lagerelement des ersten hydrostatischen Lagers angeordnet ist, welches über einen hydraulischen Widerstand mit dem ersten Lagerelement verbindbar ist, wobei die Versorgungsleitung für dieses Lager ausschließlich im Bereich des ersten Lagerelementes in die Lagerfläche mündet.

2. Vorrichtung nach Anspruch 1, **dadurch gekennzeichnet, dass** das zweite Lagerelement des ersten hydrostatischen Lagers mittels einer hydraulischen Verbindung mit einem Lagerelement der Lagerfläche des zweiten hydrostatischen Lagers verbunden ist.

3. Vorrichtung nach Anspruch 2, **dadurch gekennzeichnet, dass** das erste Lagerelement des ersten hydrostatischen Lagers keine direkte hydraulische Verbindung mit dem zweiten hydrostatischen Lager aufweist.

4. Vorrichtung nach Anspruch 1, 2 oder 3, **dadurch gekennzeichnet, dass** dem zweiten Lagerelement des ersten hydrostatischen Lagers keine Mündung einer Versorgungsleitung direkt zugeordnet ist.

5. Vorrichtung nach einem der Ansprüche 1 bis 4, **dadurch gekennzeichnet, dass** die Breite des zweiten Lagerelementes des ersten hydrostatischen Lagers bezogen auf die Breite dieses ersten hydrostatischen Lagers kleiner als die Breite des oder der Lagerelemente des zweiten hydrostatischen Lagers bezogen auf die Breite dieses hydrostatischen Lagers ist.

6. Vorrichtung nach einem der Ansprüche 1 bis 5, **dadurch gekennzeichnet, dass** der Dichtkörper als Dichtring ausgebildet ist.

7. Vorrichtung nach einem der Ansprüche 1 bis 6, **dadurch gekennzeichnet, dass** der Dichtkörper auf den hydrostatischen Lagern fliegend gelagert angeordnet ist.

8. Vorrichtung nach einem der Ansprüche 1 bis 7, **dadurch gekennzeichnet, dass** die bewegbaren Teile der hydraulischen Maschine ein Laufrad und ein Gehäuse der hydraulischen Maschine, insbesondere einer Turbomaschine, sind.

9. Vorrichtung nach einem der Ansprüche 1 bis 8, **dadurch gekennzeichnet, dass** die hydraulische Maschine eine Turbine, insbesondere eine Francisturbine oder eine Pumpturbine, ist.

10. Vorrichtung nach einem der Ansprüche 1 bis 9, **dadurch gekennzeichnet, dass** die hydraulische Maschine eine Pumpe ist.

11. Vorrichtung nach einem der Ansprüche 1 bis 10, **dadurch gekennzeichnet, dass** das Lagerelement als eine, über den Umfang gegebenenfalls abschnittsweise unterbrochene, Ringnut ausgebildet ist.

12. Vorrichtung nach einem der Ansprüche 2 bis 11, **dadurch gekennzeichnet, dass** die hydraulische Verbindung im Dichtkörper zumindest teilweise als Bohrung ausgebildet sind.

13. Vorrichtung nach einem der Ansprüche 1 bis 12, **dadurch gekennzeichnet, dass** die Versorgungsleitung zumindest teilweise als Bohrung im Gehäuse der hydraulischen Maschine ausgebildet ist.

14. Vorrichtung nach einem der Ansprüche 1 bis 13, **dadurch gekennzeichnet, dass** bei vorgegebenen geometrischen Abmessungen des Dichtkörpers, wie z.B. Höhe und Breite des Dichtringes, Anordnung und Breite der Lagerelemente, insbesondere der Nuten, Rillen, etc., der Abstand zwischen dem ersten und dem zweiten Lagerelement des ersten hydrostatischen Lagers kleiner einem vorbestimmten maximalen Abstand ist.

15. Vorrichtung nach einem der Ansprüche 1 bis 14, **dadurch gekennzeichnet, dass** in den Lagerflächen des ersten hydrostatischen Lagers drei oder mehrere voneinander beabstandete Lagerelemente vorgesehen sind, wobei die zumindest eine Versorgungsleitung in das mittlere Lagerelement mündet, und wobei von den übrigen Lagerelementen des ersten hydrostatischen Lagers zumindest zwei Lagerelemente über zumindest je eine hydraulische Verbindung mit zumindest einem Lagerelement des zweiten hydrostatischen Lagers verbunden sind.

16. Vorrichtung nach Anspruch 15, **dadurch gekennzeichnet, dass** das mittlere Lagerelement breiter als die übrigen Lagerelemente des ersten Lagers ausgeführt ist.

17. Vorrichtung nach Anspruch 15 oder 16, **dadurch gekennzeichnet, dass** das erste hydrostatische Lager mehrere, z.B. drei, Lagerelemente und das zweite hydrostatische Lager ein Lagerelement aufweisen, wobei der Abstand zwischen den äußeren Kanten der beiden äußeren der Lagerelemente bezogen auf die Breite dieses hydrostatischen Lagers kleiner als die Breite des Lagerelementes des zweiten hydrostatischen Lagers bezogen auf die Breite dieses hydrostatischen Lagers ist.

18. Vorrichtung nach einem der Ansprüche 1 bis 17, **dadurch gekennzeichnet, dass** die hydrostatischen Lager durch die Versorgungsleitung mit einem im Wesentlichen konstanten Volumenstrom des Lagermediums versorgbar sind.

19. Vorrichtung nach einem der Ansprüche 1 bis 18, **dadurch gekennzeichnet, dass** die Versorgungsleitung bzw. eine Reihe von Versorgungsleitungen mit zumindest einer Pumpe verbunden ist.

20. Vorrichtung nach einem der Ansprüche 1 bis 19, **dadurch gekennzeichnet, dass** die Versorgungsleitung bzw. eine Reihe von Versorgungsleitungen mit dem Oberwasser einer die Dichtung aufweisenden hydraulischen Maschine verbunden ist.

21. Vorrichtung nach Anspruch 19 oder 20, **dadurch gekennzeichnet, dass** vor der Mündung der Versorgungsleitung bzw. der Reihe der Versorgungsleitungen in das hydrostatische Lager zumindest eine Drossel vorgesehen ist.

22. Vorrichtung nach Anspruch 21, **dadurch gekennzeichnet, dass** die Drossel als Strömungsregelventil ausgeführt ist.

23. Vorrichtung nach einem der Ansprüche 1 bis 22, **dadurch gekennzeichnet, dass** die Geometrie des Dichtkörpers, z.B. Breite, Höhe, Position und Abmessungen der Lagerelemente und Lagerflächen, Abmessungen der Versorgungsleitung und der hydraulischen Verbindungen, etc., derart vorgebbar ist, dass die Verlustleistung der Abdichtung im Wesentlichen ein Minimum annimmt.

24. Vorrichtung nach einem der Ansprüche 1 bis 23, **dadurch gekennzeichnet, dass** in zumindest einer der Lagerflächen zumindest ein hydrodynamisches Lagerelement, vorzugsweise eine Schmiertasche, vorgesehen ist.

25. Verfahren zum Betreiben einer Abdichtung eines Spaltes zwischen zwei relativ zueinander bewegbaren Teilen einer hydraulischen Maschine, bestehend aus zumindest einem Dichtkörper, welcher gegenüber den zwei bewegbaren Teilen mittels je zumindest eines hydrostatischen Lagers gelagert wird, **dadurch gekennzeichnet, dass** vor dem Einschalten der hydraulischen Maschine zumindest einem ersten hydrostatischen Lager über eine Versorgungsquelle ein Volumenstrom, vorzugsweise ein im Wesentlichen konstanter Volumenstrom, eines hydraulischen Mediums zugeführt wird, wobei der Dichtkörper bezüglich der Dichtflächen der hydrostatischen Lager abhebt und sich vorgegebene Lagerspalte im Wesentlichen stabil einstellen und dass danach die hydraulische Maschine eingeschaltet wird.

26. Verfahren nach Anspruch 25, **dadurch gekennzeichnet, dass** bei einem Ausfall des die hydraulischen Lager versorgenden Volumenstromes die hydraulische Maschine ausgeschaltet wird.

27. Verfahren nach Anspruch 25 oder 26, **dadurch gekennzeichnet, dass** im Falle eines Ausfalles der Lagerversorgung die hydraulischen Lager zumindest über einen gewissen Zeitraum hinweg von einer Notversorgungsquelle, wie z.B. ein Windkessel oder ein Notversorgungsreservoir, versorgt werden.

28. Verfahren nach einem der Ansprüche 25 bis 27, **dadurch gekennzeichnet, dass** nach dem Hochfahren der hydraulischen Maschine der Volumenstrom im Wesentlichen auf ein Minimum verringert wird, z.B. indem eine Anzahl der Versorgungsquellen abgeschaltet wird.

29. Verfahren nach einem der Ansprüche 25 bis 28, **dadurch gekennzeichnet, dass** natürliche Änderungen der Geometrie des Dichtkörpers, wie z.B. hervorgerufen durch Temperatureinflüsse, Fliehkrafteffekte, das Aufquellen des Dichtkörpers im Medium, etc., durch Variieren des zugeführten Volumenstromes in der Weise ausgeglichen werden, dass die Lagerspalte im Wesentlichen konstant bleiben.

30. Verfahren zur Inbetriebnahme einer Dichtung eines Spaltes zwischen zwei zueinander bewegbaren Teilen einer hydraulischen Maschine mit zumindest einem Dichtkörper, welcher gegenüber den zwei Teilen mittels je zumindest eines hydrostatischen Lagers gelagert wird, **dadurch gekennzeichnet, dass** vor dem Einschalten der hydraulischen Maschine zumindest einem hydrostatischen Lager ein im Wesentlichen konstanter Volumenstrom in der Weise zugeführt wird, dass der Dichtkörper bezüglich der Dichtflächen der hydrostatischen Lager abhebt und sich vorgegebene Lagerspalte einstellen dass danach die hydraulische Maschine eingeschaltet wird und dass danach kontrolliert der Volumenstrom reduziert wird bis die Lagerflächen des Dichtkörpers und die zugeordneten Lagerflächen an der hydraulischen Maschine in einen Reibungszustand, vorzugsweise ein Mischreibungszustand, übergehen und zu schleifen beginnen, sodass sich in die Lagerflächen ein Lagerbild einschleift.

31. Verfahren nach Anspruch 30, **dadurch gekennzeichnet, dass** nach und/oder während dem Einschleifen eines Lagerbildes der Volumenstrom erhöht wird, sodass sich im Wesentlichen die für den Betrieb vorgegebenen Lagerspalte einstellen.

32. Verfahren zur Auslegung einer Dichtung eines Spaltes zwischen zwei zueinander bewegbaren Teilen einer hydraulischen Maschine mit zumindest einem Dichtkörper, welcher gegenüber den zwei Teilen mittels je zumindest eines hydrostatischen Lagers gelagert wird, **dadurch gekennzeichnet, dass** eine Verlustleistung der Dichtung vorgegeben wird und die Geometrie der Dichtung, z.B. Breite, Höhe, Position und Abmessungen der Lagerelemente und Lagerflächen des Dichtkörpers, Abmessungen der Versorgungsleitung und der hydraulischen Verbindungen, etc., anhand mathematischer, physikalischer Modelle der Dichtung unter Berücksichtigung der vorgegebenen Verlustleistung und/oder der Geometrie und/oder der Betriebscharakteristik der hydraulischen Maschine berechnet wird.

33. Verfahren nach Anspruch 32, **dadurch gekennzeichnet, dass** die Geometrie hinsichtlich dem Energieverbrauch optimiert wird, die Verlustleistung der Dichtung also im Wesentlichen minimiert wird.

34. Verfahren nach Anspruch 32 oder 33, **dadurch gekennzeichnet, dass** die Berechnungen in einem Computer durchgeführt werden.

## Claims

1. An apparatus for sealing a gap between two mutually mobile parts of a hydraulic machine with at least one sealing element which is mounted with respect to the two mobile parts by means of at least one hydrostatic bearing in each case, each of the hydrostatic bearings comprising mutually facing bearing surfaces and at least one bearing surface having at least one bearing element, such as a groove, flute or the like, which can be supplied with a hydraulic bearing medium via at least one supply line, **characterized in that**, at a distance from the first bearing element of a first hydrostatic bearing, at least one further, second bearing element of the first hydrostatic bearing is arranged, which is connected to the first bearing element via a hydraulic resistance, the supply line for this bearing opening only into the bearing surface in the region of the first bearing element.

2. The apparatus as claimed in claim 1, **characterized in that** the second bearing element of the first hydrostatic bearing is connected to a bearing element of the bearing surface of the second hydrostatic bearing by means of a hydraulic connection.

3. The apparatus as claimed in claim 2, **characterized in that** the first bearing element of the first hydrostatic bearing has no direct hydraulic connection to the second hydrostatic bearing.

4. The apparatus as claimed in claim 1, 2 or 3, **characterized in that** the second bearing element of the first hydrostatic bearing is not directly assigned any opening of a supply line.

5. The apparatus as claimed in one of claims 1 to 4, **characterized in that** the width of the second bearing element of the first hydrostatic bearing, as based on the width of this first hydrostatic bearing, is smaller than the width of the bearing element or elements of the second hydrostatic bearing, as based on the width of this hydrostatic bearing.

6. The apparatus as claimed in one of claims 1 to 5, **characterized in that** the sealing element is formed as a sealing ring.

7. The apparatus as claimed in one of claims 1 to 6, **characterized in that** the sealing element is arranged mounted in a floating manner on the hydrostatic bearings.

8. The apparatus as claimed in one of claims 1 to 7, **characterized in that** the mobile parts of the hydraulic machine are an impeller and a housing of the hydraulic machine, in particular of a turbo machine.

9. The apparatus as claimed in one of claims 1 to 8, **characterized in that** the hydraulic machine is a turbine, in particular a Francis turbine or a pump turbine.

10. The apparatus as claimed in one of claims 1 to 9, **characterized in that** the hydraulic machine is a pump.

11. The apparatus as claimed in one of claims 1 to 10, **characterized in that** the bearing element is formed as an annular groove which may be interrupted in sections over the circumference.

12. The apparatus as claimed in one of claims 2 to 11, **characterized in that** the hydraulic connection in the sealing element is at least partly formed as a bore.

13. The apparatus as claimed in one of claims 1 to 12, **characterized in that** the supply line is at least partly formed as a bore in the housing of the hydraulic machine.

14. The apparatus as claimed in one of claims 1 to 13, **characterized in that**, given predefined geometric dimensions of the sealing element, such as the height and width of the sealing ring, arrangement and width of the bearing elements, in particular of the grooves, flutes, etc., the distance between the first and the second bearing elements of the first hydrostatic bearing is smaller than a predetermined maximum distance.

15. The apparatus as claimed in one of claims 1 to 14, **characterized in that** three or more bearing elements spaced apart from one another are provided in the bearing surfaces of the first hydrostatic bearing, the at least one supply line opening into the central bearing element and, of the remaining bearing elements of the first hydrostatic bearing, at least two bearing elements being connected to at least one bearing element of the second hydrostatic bearing via at least one hydraulic connection in each case.

16. The apparatus as claimed in claim 15, **characterized in that** the central bearing element is designed to be broader than the remaining bearing elements of the first bearing.

17. The apparatus as claimed in claim 15 or 16, **characterized in that** the first hydrostatic bearing has a plurality of bearing elements, for example three bearing elements, and the second hydrostatic bearing has one bearing element, the distance between the outer edges of the two outer of the bearing elements, as based on the width of this hydrostatic bearing, being smaller than the width of the bearing element of the second hydrostatic bearing, as based on the width of this hydrostatic bearing.

18. The apparatus as claimed in one of claims 1 to 17, **characterized in that** the hydrostatic bearings can be supplied with a substantially constant volume flow of the bearing medium through the supply line.

19. The apparatus as claimed in one of claims 1 to 18, **characterized in that** the supply line or a series of supply lines is connected to at least one pump.

20. The apparatus as claimed in one of claims 1 to 19, **characterized in that** the supply line or a series of supply lines is connected to the headwater of a hydraulic machine having the seal.

21. The apparatus as claimed in claim 19 or 20, **characterized in that** at least one restrictor is provided upstream of the opening of the supply line or the series of supply lines into the hydrostatic bearing.

22. The apparatus as claimed in claim 21, **characterized in that** the restrictor is designed as a flow regulating valve.

23. The apparatus as claimed in one of claims 1 to 22, **characterized in that** the geometry of the sealing element, for example width, height, position and dimensions of the bearing elements and bearing surfaces, dimensions of the supply line and of the hydraulic connections, etc., can be predefined in such a way that the power loss of the seal substantially assumes a minimum.

24. The apparatus as claimed in one of claims 1 to 23, **characterized in that** at least one hydrodynamic bearing element, preferably a lubrication pocket, is provided in at least one of the bearing surfaces.

25. A method of operating a seal for a gap between two mutually mobile parts of a hydraulic machine, comprising at least one sealing element which is mounted with respect to the two mobile parts by means of at least one hydrostatic bearing in each case, **characterized in that**, before the hydraulic machine is switched on, at least one first hydrostatic bearing is supplied via a supply source with a volume flow, preferably a substantially constant volume flow, of a hydraulic medium, the sealing element being lifted with respect to the sealing surfaces of the hydrostatic bearings and predefined bearing gaps being established in a substantially stable manner, and **in that** the hydraulic machine is then switched on.

26. The method as claimed in claim 25, **characterized in that**, in the event of failure of the volume flow supplying the hydraulic bearings, the hydraulic machine is switched off.

27. The method as claimed in claim 25 or 26, **characterized in that**, in the event of failure of the bearing supply, the hydraulic bearings are supplied from an emergency supply source, such as an air reservoir or an emergency supply reservoir, at least over a certain time period.

28. The method as claimed in one of claims 25 to 27, **characterized in that**, after the hydraulic machine has been run up, the volume flow is substantially reduced to a minimum, for example by a number of the supply sources being switched off.

29. The method as claimed in one of claims 25 to 28, **characterized in that** natural changes in the geometry of the sealing element, such as those caused by temperature influences, centrifugal force effects, the swelling of the sealing element in the medium, etc., are compensated for by varying the volume flow supplied in such a way that the bearing gaps remain substantially constant.

30. A method of commissioning a seal for a gap between two mutually mobile parts of a hydraulic machine with at least one sealing element which is mounted with respect to the two parts by means of at least one hydrostatic bearing in each case, **characterized in that**, before the hydraulic machine is switched on, at least one hydrostatic bearing is supplied with a substantially constant volume flow in such a way that the sealing element is lifted with respect to the sealing surfaces of the hydrostatic bearings and predefined bearing gaps are established, **in that** the hydraulic machine is then switched on, and **in that** the volume flow is then reduced in a controlled manner until the bearing surfaces of the sealing element and the associated bearing surfaces on the hydraulic machine change into a frictional state, preferably a mixed friction state and begin to rub, so that a bearing pattern is ground into the bearing surfaces.

31. The method as claimed in claim 30, **characterized in that**, after and/or during the grinding of a bearing pattern, the volume flow is increased, so that the bearing gaps predefined for the operation are substantially established.

32. A method of designing a seal for a gap between two mutually mobile parts of a hydraulic machine with at least one sealing element which is mounted with respect to the two parts by means of at least one hydrostatic bearing in each case, **characterized in that** a power loss of the seal is predefined and the geometry of the seal, for example width, height, position and dimensions of the bearing elements and bearing surfaces of the sealing element, dimensions of the supply line and of the hydraulic connections, etc., are calculated by using mathematical, physical models of the seal while taking account of the predefined power loss and/or of the geometry and/or of the operating characteristics of the hydraulic machine.

33. The method as claimed in claim 32, **characterized in that** the geometry is optimized with respect to the energy consumption, the power loss of the seal is therefore substantially minimized.

34. The method as claimed in claim 32 or 33, **characterized in that** the calculations are carried out in a computer.

## Revendications

1. Dispositif pour assurer l'étanchéité d'un intervalle entre deux pièces, mobiles l'une par rapport à l'autre, d'une machine hydraulique, avec au moins un corps d'étanchéité, monté par rapport aux deux parties déplaçables au moyen chaque fois d'un palier hydrostatique, chacun des paliers hydrostatiques étant formé de faces de palier tournées l'une vers l'autre, et où au moins une face de palier présente au moins un élément de palier, tel que par exemple une rainure, une cannelure ou analogue, pouvant être alimentée, par au moins une conduite d'alimentation, avec un fluide de palier hydraulique, **caractérisé en ce que**, à une certaine distance par rapport au premier élément de palier, d'un premier palier hydrostatique, est disposé au moins un autre, deuxième, élément de palier du premier palier hydrostatique, qui est susceptible d'être relié au premier élément de palier, par l'intermédiaire d'une résistance hydraulique, sachant que la conduite d'alimentation pour ce palier débouche exclusivement dans la zone du premier élément de palier, dans la face de palier.

2. Dispositif selon la revendication 1, **caractérisé en ce que** le deuxième élément de palier du premier palier hydrostatique est relié, au moyen d'une liaison hydraulique, à un élément de palier de la face de palier du deuxième palier hydrostatique.

3. Dispositif selon la revendication 2, **caractérisé en ce que** le premier élément de palier du premier palier hydrostatique ne présente aucune liaison hydraulique directe avec le deuxième palier hydrostatique.

4. Dispositif selon la revendication 1, 2 ou 3, **caractérisé en ce qu'**aucune embouchure d'une conduite d'alimentation n'est directement associée au deuxième élément de palier du premier palier hydrostatique.

5. Dispositif selon l'une des revendications 1 à 4, **caractérisé en ce que** la largeur du deuxième élément de palier du premier palier hydrostatique, par rapport à la largeur de ce premier palier hydrostatique, est inférieure à la largeur du ou des éléments de palier du deuxième palier hydrostatique, par rapport à la largeur de ce palier hydrostatique.

6. Dispositif selon l'une des revendications 1 à 5, **caractérisé en ce que** le corps d'étanchéité est réalisé sous la forme de bagues d'étanchéité.

7. Dispositif selon l'une des revendications 1 à 6, **caractérisé en ce que** le corps d'étanchéité est disposé en étant monté de façon flottante sur les paliers hydrostatiques.

8. Dispositif selon l'une des revendications 1 à 7, **caractérisé en ce que** les pièces mobiles de la machine hydraulique sont une roue mobile et un carter de la machine hydraulique, en particulier d'une turbomachine.

9. Dispositif selon l'une des revendications 1 à 8, **caractérisé en ce que** la machine hydraulique est une turbine, en particulier une turbine Francis ou une turbine pompe.

10. Dispositif selon l'une des revendications 1 à 9, **caractérisé en ce que** la machine hydraulique est une pompe.

11. Dispositif selon l'une des revendications 1 à 10, **caractérisé en ce que** l'élément de palier est réalisé sous la forme de gorge annulaire, interrompue le cas échéant par tronçon sur la périphérie.

12. Dispositif selon l'une des revendications 2 à 11, **caractérisé en ce que** la liaison hydraulique dans le corps d'étanchéité est réalisée au moins partiellement sous forme de perçage.

13. Dispositif selon l'une des revendications 1 à 12, **caractérisé en ce que** la conduite, d'alimentation est réalisée au moins partiellement sous forme de perçage dans le carter de la machine hydraulique.

14. Dispositif selon l'une des revendications 1 à 13, **caractérisé en ce que**, dans le cas de dimensions géométriques prédéterminées du corps d'étanchéité, telles que, par exemple, la hauteur et la largeur de la bague d'étanchéité, l'agencement et la largeur des éléments de palier, en particulier des rainures, des cannelures, etc., l'espacement, entre le premier et le deuxième élément de palier du premier palier hydrostatique, est inférieur à un espacement maximal prédéterminé.

15. Dispositif selon l'une des revendications 1 à 14, **caractérisé en ce que**, dans les surfaces de palier du premier palier hydrostatique, sont prévues trois éléments de palier ou plus, espacés les uns des autres, sachant que la au moins une conduite d'alimentation débouche dans l'élément de palier central, et parmi les autres éléments de palier du premier palier hydrostatique, au moins deux éléments de palier sont reliés, par au moins chaque fois une liaison hydraulique, à au moins un élément de palier du deuxième palier hydrostatique.

16. Dispositif selon la revendication 15, **caractérisé en ce que** l'élément de palier central est plus large que les autres éléments de palier du premier palier.

17. Dispositif selon la revendication 15 ou 16, **caractérisé en ce que** le premier palier hydrostatique présente plusieurs éléments de palier, par exemple trois, et le deuxième palier hydrostatique présente un élément de palier, l'espacement, entre les arêtes extérieures des deux éléments de palier extérieurs parmi les éléments de palier, en se référant à la largeur de ce palier hydrostatique, étant inférieur à la largeur de l'élément de palier du deuxième palier hydrostatique, en se référant à la largeur de ce palier hydrostatique.

18. Dispositif selon l'une des revendications 1 à 17, **caractérisé en ce que** les paliers hydrostatiques peuvent être alimentés, par la conduite d'alimentation, avec au moins un débit volume de fluide de palier sensiblement constant.

19. Dispositif selon l'une des revendications 1 à 18, **caractérisé en ce que** la conduite d'alimentation, respectivement une série de conduites d'alimentation, est reliée à au moins une pompe.

20. Dispositif selon l'une des revendications 1 à 19, **caractérisé en ce que** la conduite d'alimentation, respectivement une série de conduites d'alimentation, est reliée à l'eau d'amont d'une machine hydraulique présentant le dispositif d'étanchéité.

21. Dispositif selon la revendication 19 ou 20, **caractérisé en ce qu'**avant l'embouchure de la conduite d'alimentation ou de la série de conduite d'alimentation, au moins un étranglement est prévu dans le palier hydrostatique.

22. Dispositif selon la revendication 21, **caractérisé en ce que** l'étranglement est réalisé sous la forme de soupape de régulation d'écoulement.

23. Dispositif selon l'une des revendications 1 à 22, **caractérisé en ce que** la géométrie du corps d'étanchéité, par exemple, la largeur, la hauteur, la position et les dimensions des éléments de palier et des faces de palier, les dimensions de la conduite d'alimentation et des liaisons hydrauliques, etc., peuvent être prédéterminées de manière que la perte de puissance dans le dispositif d'étanchéité soit sensiblement minimale.

24. Dispositif selon l'une des revendications 1 à 23, **caractérisé en ce que** dans au au moins l'une des faces de palier, est prévu au moins un élément de palier hydrodynamique, de préférence une poche de lubrification.

25. Procédé de fonctionnement d'un dispositif d'étanchéité d'un intervalle entre deux parties, mobiles l'une par rapport à l'autre, d'une machine hydraulique, formée d'au moins un corps d'étanchéité, montée par rapport aux deux parties déplaçables chaque fois d'au moins un palier hydrostatique, **caractérisé en ce que**, avant la mise en service de la machine hydraulique, au moins à un premier palier hydrostatique, par l'intermédiaire d'une source d'alimentation, est amené un débit volume, de préférence un débit volume sensiblement constant d'un fluide hydraulique, le corps d'étanchéité produisant un soulèvement par rapport aux faces d'étanchéité des paliers hydrauliques et des intervalles de palier prédéterminés s'établissant de façon sensiblement stable et, ensuite, la machine hydraulique étant mise en service.

26. Procédé selon la revendication 25, **caractérisé en ce que**, en cas de défaillance du débit volume alimentant les paliers hydrauliques, la machine hydraulique est mise hors service.

27. Procédé selon la revendication 25 ou 26, **caractérisé en ce que**, en cas de défaillance de l'alimentation de palier, les paliers hydrauliques sont alimentés, au moins sur une certaine durée, par une source d'alimentation de secours, tel que par exemple un réservoir d'air ou un réservoir d'alimentation de secours.

28. Procédé selon l'une des revendications 25 à 27, **caractérisé en ce qu'**après la montée en régime de la machine hydraulique, le débit volume est diminué sensiblement à un minimum, par exemple en mettant hors service un certain nombre des sources d'alimentation.

29. Procédé selon l'une des revendications 25 à 28, **caractérisé en ce que** des modifications naturelles de la géométrie du corps d'étanchéité, telles que, par exemple, provoquées par des influences de la température, des effets de la force centrifuge, le gonflement du corps d'étanchéité dans la fluide, etc., sont compensés par une compensation du débit volume fourni, de manière que les intervalles de palier restent sensiblement constants.

30. Procédé de mise en service d'un dispositif d'étanchéité d'un intervalle entre deux parties, mobiles l'une par rapport à l'autre, d'une machine hydraulique, avec au moins un corps d'étanchéité monté par rapport aux deux parties, chaque fois à l'aide d'au moins un palier hydrostatique, **caractérisé en ce que**, avant la mise en service de la machine hydraulique, au moins à un palier hydrostatique est amené un débit volume sensiblement constant, de manière que le corps d'étanchéité se dégage des faces d'étanchéité des paliers hydrostatiques et que des intervalles de palier prédéterminés s'établissent, **en ce que**, ensuite, la machine hydraulique est mise en service et ce que, ensuite, le débit volume est réduit de façon contrôlée jusqu'à ce que les faces de palier du corps d'étanchéité et les faces de palier associées, sur la machine hydraulique, passent en un état de frottement, de préférence un état de frottement mixte, et commencent à frotter, de sorte que, dans les faces de palier, soit produite une image de palier par un phénomène d'abrasion.

31. Procédé selon la revendication 30, **caractérisé en ce qu'**après et/ou pendant l'induction du phénomène d'abrasion d'une image de palier, le débit volume est augmenté de sorte que des intervalles de palier, prédéterminés pour le fonctionnement, s'établissent essentiellement.

32. Procédé de conception d'un dispositif d'étanchéité d'un intervalle entre deux parties, mobiles l'une par rapport à l'autre, d'une machine hydraulique, avec au moins un corps d'étanchéité, monté par rapport aux deux parties, chaque fois à l'aide d'au moins un palier hydrostatique, **caractérisé en ce qu'**une perte de puissance du dispositif d'étanchéité est prédéterminée et que la géométrie du dispositif d'étanchéité, par exemple la largeur, la hauteur, la position et les dimensions de l'élément de palier et des faces de palier du corps d'étanchéité, les dimensions de la conduite d'alimentation et les liaisons hydrauliques, etc., est calculée à l'aide de modèles mathématiques, physiques, du dispositif d'étanchéité en prenant en considération la perte de puissance prédéterminée et/ou la géométrie et/ou la caractéristique en fonctionnement de la machine hydraulique.

33. Procédé selon la revendication 32, **caractérisé en ce que** la géométrie est optimisée du point de vue de la consommation énergétique, la perte de puissance du dispositif d'étanchéité étant donc sensiblement minimisée.

34. Procédé selon la revendication 32 ou 33, **caractérisé en ce que** les calculs sont effectués dans un ordinateur.
